# EUROPÄISCHE PATENTANMELDUNG

(11) **EP 0 704 147 A2**
(43) Veröffentlichungstag der Anmeldung: **03.04.1996**
(21) Anmeldenummer: 95115213.1
(22) Anmeldetag: 27.09.1995
(51) Int. Cl.: A01C 7/00, A01C 5/06

(54) **Einrichtung zum Direktsäen**

(30) Priorität: 27.09.1994 DE 4434484; 04.11.1994 DE 4439441
(71) Anmelder: Hendlmeier, Konrad, D-93107 Untersanding (DE)
(72) Erfinder: Hendlmeier, Konrad, D-93107 Untersanding (DE)
(74) Vertreter: Wasmeier, Alfons, Dipl.-Ing.

(57) **Zusammenfassung**

Bei einer Einrichtung zum Säen von Saatgut mit Minimalbodenbearbeitung und mit einer Striegelwalze sind die Striegelelemente zwischen zwei hintereinanderliegenden Reihen von Saatgutausläufen wirkend angeordnet; der Durchmesser des Umkreises der Striegelelemente ist etwas größer als der Abstand zweier benachbarter Saatgutausläufe und so groß ausgelegt, daß die Striegelelemente dem jeweiligen vorderen und hinteren Saatgutauslauf in Bodennähe abstreifend zugeordnet sind; die Breite der Striegelelemente ist gerngfügig kleiner als der axiale Abstand zweier benachbarter, auf Lücke hintereinander angeordneter Striegelelemente zweier benachbarter Achsen, so daß an den Saatgutausläufen vorhandenes organisches Material zwangsläufig abgetreift wird.

## Beschreibung

Die Erfindung betrifft eine Einrichtung zum Direktsäen mit den Merkmalen des Oberbegriff es des Anspruches 1.

In der Patentanmeldung P 43 34 221.3 ist ein Verfahren und eine Vorrichtung zum Säen von Saatgut mit Minimalbodenbearbeitung dieser Art bereits vorgeschlagen worden. Die dort beanspruchte Vorrichtung zeigt beispielsweise in den Figuren 19 und 20 eine schematisch dargestellte zweireihige Sämaschine, in der die Saatrohre und deren Ausläufe bzw. Schare in zwei in Bewegungsrichtung versetzten Reihen angeordnet sind. Der hinteren Achse ist eine Welle nachgeschaltet, die als Striegelwalze ausgebildet ist und die Striegelelemente, z. B. Striegelzinken aufweist, die mit den Scharstielseitenflächen abstreifend zusammenwirken, derart, daß mit Erdreich vermischtes organisches Material abgestreift und hinter der Saatgutablagestelle auf den Boden verteilt, zerkleinert und egalisiert wird. Wenn die Striegelzinken im Betrieb mit der Erdoberfläche bzw. im Erdreich liegenden Steinen oder ähnlichen Hindernissen in Kontakt kommen, brechen die Striegelzinken häufig oder werden deformiert, so daß ein Auswechseln der gesamten Striegelelemente oder der Striegelzinken, falls diese auswechselbar ausgeführt sind, erforderlich wird.

Aufgabe der Erfindung ist es, die gattungsgemäße Einrichtung so weiterzubilden, daß die Striegelzinken bei einem derartigen Kontakt mit festen Gegenständen nicht zu Bruch gehen bzw. nicht beschädigt werden, und daß trotzdem ein einwandfreies und effektives Abstreifen des mit Erdreich vermischten organischen Materials an den Scharstielen sichergestellt ist. Des weiteren ist Aufgabe der Erfindung, die Einrichtung so kompakt und und die Baulänge so kurz wie möglich auszuführen, um die Gesamtmaschinenlänge soweit wie möglich zu verringern.

Gemäß der Erfindung wird dies mit den Merkmalen des Kennzeichens des Anspruches 1 bzw. des Anspruches 15 erreicht.

Mit den Vorschlägen nach der Erfindung, die in unterschiedlichen Ausführungsformen nachstehend beschrieben werden, wird erreicht, daß der Bodenbearbeitungsteil der Einrichtung, insbesondere die Striegelwalze, beim Auftreffen auf einen größeren Stein oder ein entsprechendes Hindernis diesem Hindernis nach oben bzw. seitlich ausweichen kann, so daß dadurch die Striegelzinken nicht beschädigt werden und dann, wenn das Hindernis den Bereich der Zinken verlassen hat, diese wieder in den Ausgangs- bzw. Betriebszustand zurückkehren. Bei einer Ausführungsform der Erfindung geschieht dies dadurch, daß das Bodenbearbeitungsteil mit Striegelwalze, Scharstielen, Saatgutauslässen und Stützrädern über einen Rahmen als eine Einheit ohne Sägutbehälter ausgebildet ist, und daß der Sägutbehälter von einem zweiten, vom ersten Rahmen unabhängigen Rahmen aufgenommen wird, der in sich fahrbar ist und der mit dem Schlepper, z.B. der Dreipunktaufhängung des Schleppers, verbunden ist. Wenn ein Striegelzinken auf ein Hindernis auftrifft, kann damit das Bodenbearbeitungsteil sich an dieser Stelle heben und auf diese Weise dem Hindernis ausweichen, ohne daß die Belastung durch den sehr schweren Saatgutbehälter einer Höhenbewegung entgegenwirken bzw. diese verhindern würde. Das Bodenbearbeitungsteil ist somit gegenüber dem Saatgutbehälter gewichtsentlastet, wobei das Sävorrichtungsteil auch über getrennte Stützräder Bodenkontakt hat. Zwischen dem Rahmen des Säteils und des Bodenbearbeitungsteils können Federn, z.B. Schraub- oder Flachfedern, angeordnet sein, damit das Säteil einen bestimmten, einstellbaren Druck auf das Bodenbearbeitungsteil ausüben kann, falls dies erwünscht ist. Die Stützräder der voneinander getrennten Teile sind vorzugsweise höhenverstellbar ausgeführt.

In weiterer Ausgestaltung der Erfindung wird vorgeschlagen, daß ein einteiliger Rahmen für die Bodenbearbeitungsvorrichtung und die Sastgutaufnahmevorrichtung vorgesehen ist, und daß die Striegelzinken beweglich ausweichen bzw. auslenkbar und selbstrückstellend bzw. zwangsrückstellend ausgebildet sind, so daß die Striegelwalze selbst ihre Lage unverändert beibehält und lediglich die Zinken, die unmittelbar mit dem Hindernis in Kontakt kommen, ausgelenkt werden. Dies kann mit Hilfe von Federn, die auf der Striegelwalzenwelle oder einem starr mit der Welle verbundenen Trägerarm befestigt sind, oder aber dadurch, daß an sich starre Zinken gelenkig mit der Welle bzw. dem Befestigungsarm verbunden sind, erreicht werden, so daß durch die Rotation der Welle die Zinken durch Eigengewicht und/oder durch Rotationsenergie selbsttägig wieder in ihre Ausgangsstellung zurückkehren, wenn sie beim Auftreffen auf ein Hindernis um die Gelenkstelle ausweichen. Die Rotationsgeschwindigkeit der Striegelwalzenwelle mit den Striegelzinken ist höher als die Fahrgeschwindigkeit der Gesamtanordnung, so daß die gelenkig mit den auf der Welle bzw. daran befestigten Flanschen oder Trägerarmen gelagerten Striegelzinken mit relativ hoher Drehzahl umlaufen und aufgrund des Eigengewichtes beim Auslenken eine rasche Rückstellung ergeben, wenn die Zinken selbst rückstellend gelagert sind. Im Falle einer Zwangsrückstellung der Zinken erfolgt die Rückstellung durch Federkraft, wobei beispielsweise Gummifedern, Drehstabfedern, Spiralfedern, Blattfedern usw. verwendet werden können, die ein Auslenken der Striegelzinken in ihrer Rotationsebene oder in Querrichtung hierzu ergeben. Die Striegelzinken können auch unmittelbar an einem als Blattfeder ausgebildeten Befestigungsarm mit der rotierenden Welle der Vorrichtung verbunden sein.

Eine weitere Variante der Erfindung ist darin zu sehen daß die rotierende Welle der Striegelwalze zusammen mit den Striegelwerkzeugen höhenbeweglich angeordnet ist, so daß die Werkzeuge bzw. Striegelzinken starr mit der Welle befestigt sein können und die Welle beim Auftreffen auf ein Hindernis höhenbeweglich im Rahmen geführt nach oben aus gelenkt werden kann sowie sich aufgrund des Eigengewichtes selbsttätig wieder abwärts in die Arbeitsposition bewegt, wenn der bzw. die Zinken wieder außer Eingriff mit dem Hindernis kommen. Eine derartige Führung der Welle kann mit dem Rahmen der Vorrichtung pendelnd verbunden sein.

Nachstehend wird die Erfindung in Verbindung mit der Zeichnung anhand von Ausführungsbeispielen erläutert. Es zeigt:
- Fig. 1: die Darstellung einer Ausführungsform der erfindungsgemäßen Einrichtung in Seitenansicht,
- Fig. 2: eine weitere Ausführungsfrom der erfindungsgemäßen Einrichtung in Seitenansicht,
- Fig. 3: die schematische Darstellung einer Striegelwalze zwischen zwei Saatgutausläufen entsprechend Figur 1;
- Fig. 4: eine schematische Darstellung einer Ausführungsform der Schwenkbefestigung von Striegelzinken,
- Fig. 5: eine abgeänderte Ausführungsform nach Figur 4,
- Fig. 6: eine weitere abgeänderte Ausführungsform nach Figur 4,
- Fig. 7: eine Darstellung entsprechend der nach Figur 4 mit Spiralfeder,
- Fig. 8: eine Darstellung nach Figur 4 mit Blattfeder,
- Fig. 9: eine abgeänderte Ausführung der Figur 8,
- Fig. 10: eine allgemeine Ausführungsform einer Striegelzinkenanordnung nach der Erfindung.

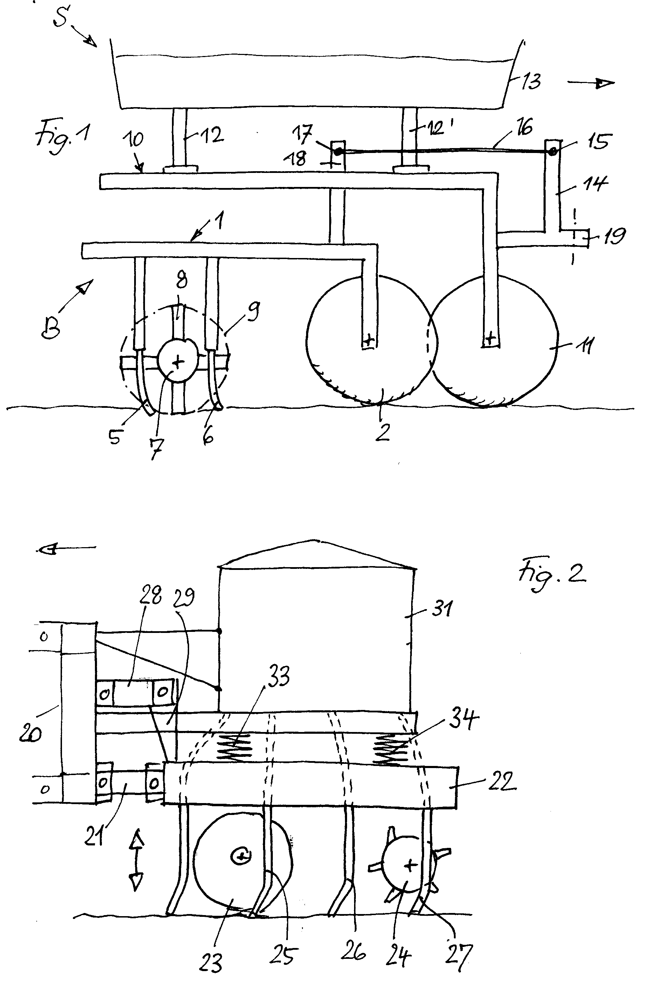

Figur 1 zeigt eine Ausführungsform einer Säeinrichtung nach der Erfindung mit einem Bodenbearbeitungsteil B und einem Saatgutteil S. Der Bodenbearbeitungsteil B besteht aus einem Rahmen 1 mit einem Stützrad 2, das auch als Stützwalze, Stempelpacker oder dergl. ausgebildet sein kann. Am Rahmen 1 sind Scharstiele 3, 4 befestigt, die Saatgutausläufe 5, 6 aufweisen. Zwischen zwei Scharstielen 3, 4 ist eine rotierende Striegelwalze 7 angeordnet, die radial nach außen verlaufende Striegelelemente 8 aufweist, deren äußere Begrenzung ein Umkreis 9 ist. Der Saatgutteil S besteht aus einem Rahmen 10 mit einem Stützrad 11 und vom Rahmen 10 sich nach oben erstreckenden Tragstützen 12, 12', die den Saatguttank 13 aufnehmen. Am Rahmen 10 ist ein Träger 14 befestigt, von dem über eine gelenkige Verbindung 15 eine vorzugsweise längenverstellbare Verbindungsstange 16 zu einer gelenkigen Verbindung 17 führt, die an einem Träger 18 angeordnet ist, der mit dem Rahmen 1 verbunden ist. Auf diese Weise sind die beiden Rahmen 1 und 10 miteinander beweglich, insbesondere relativ zueinander höhenbeweglich, verbunden. Am Träger 14 ist eine Befestigungsvorrichtung 19 vorgesehen, die mit einem Zugfahrzeug bzw. Schlepper (nicht dargestellt) verbunden ist.

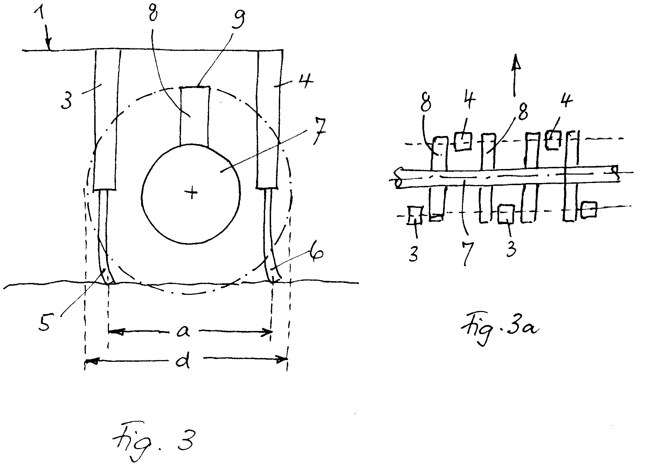

Bei der Ausführungsform nach Figur 2 ist die Zugverbindung zum Schlepper mit 20 bezeichnet; über eine Anhängevorrichtung 21 ist der Rahmen 22 des Bodenbearbeitungsteiles B angehängt. Dieser Bodenbearbeitungsteil 22 weist ein Stützrad 23 im vorderen Bereich sowie eine Striegelwalze 24 im hintern Bereich auf. Mit dem Rahmenteil 22 sind Scharstiele 25, 26, 27 mit Saatgutausläufen verbunden. Die Striegelwalze 24 ist dem hinteren Saatgutauslauf 27 zugeordnet. Am Schlepper 20 ist des weiteren eine Verbindungsvorrichtung 28 vorgesehen, die über eine Tragvorrichtung 29 den Rahmen 30 für den Saatgutbehälter 31 aufnimmt. Der Rahmen 30 ist mit dem Rahmen 22 über Federanordnungen 33, 34 verbunden, so daß erforderlichenfalls das Gewicht des Saatgutbehälters 31 auf den Rahmen und das Rahmenbauteil 22 einwirken kann.

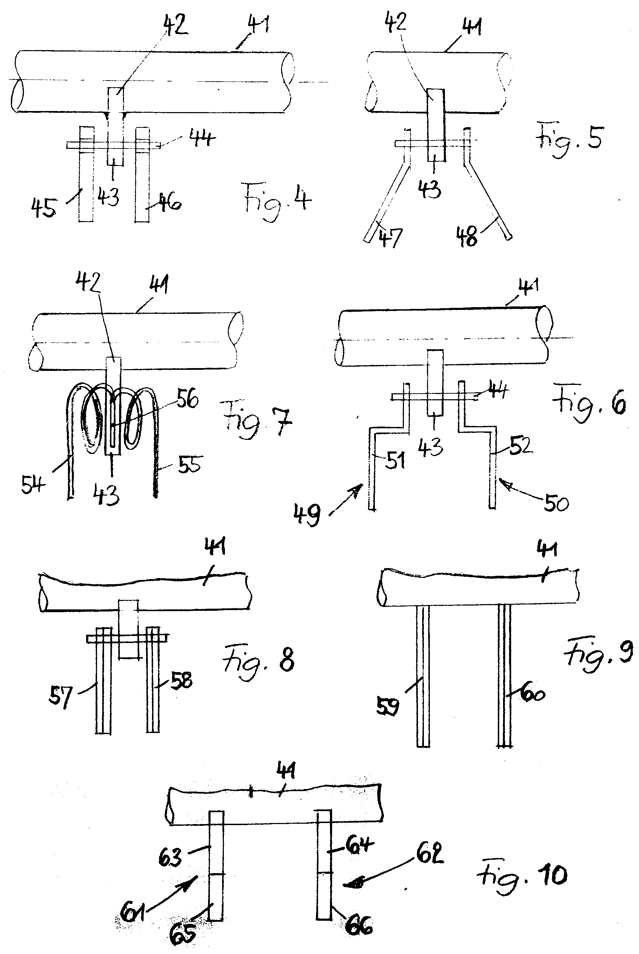

In Figur 3 und 3a ist die Zuordnung der Striegelwalze 8 zu den Scharstielen bzw. Saatgutausläufen dargestellt, die jeweils über Schläuche mit dem Saatgutbehälter 13 verbunden sind und von dort gespeist werden. Wie in Figur 3 dargestellt, ist der Durchmesser d des Umkreises 9 der Striegelwalzenelemente 8 geringfügig größer als der Abstand a zweier benachbarter, hintereinander angeordneter Scharstiele bzw. Saatgutausläufe ausgebildet, und die Relation von b zu a ist so gewählt, daß der Umkreis 9 der Striegelelemente 8 die Saatgutausläufe in Bodenhöhe bzw. knapp über Bodenhöhe schneidet, so daß organisches Material, daß sich an den Saatgutausläufen festlegt, einwandfrei und zwangsweise abgestreift wird. Die Striegelzinken sind dabei in Achsrichtung der Striegelwalze so im Abstand zueinander angeordnet, daß sie nahe den Saatgutausläufen wirken. Wenn die Saatgutausläufe (Fig. 3a) hintereinander relativ eng auf Lücke angeordnet sind, kann somit ein Striegelzinken gleichzeitig als Abstreifer für den hinteren linken Saatgutauslauf und den vorderen rechten Saatgutauslauf dienen. In den Fällen, in denen jeweils ein Striegelzinken einem Saatgutauslauf zugeordnet ist, ist der Striegelzinken in Fahrtrichtung vor dem Striegelzinken angeordnet.

Die Striegelwalze 41 weist in Achsrichtung auf ihrem Umfang versetzt angeordnete Striegelelemente 42 auf, die starr mit der Welle 41 verbunden sind und einen Befestigungsarm 43 besitzen, der eine Querachse 44 aufnimmt, auf der beidseitig des Befestigungsarmes 43 jeweils ein Striegelzinken 45, 46 angeordnet ist. Die Querachse 44 kann starr mit dem Befestigungsarm 43 verbunden sein, während die Zinken 45, 46 frei drehbar auf der Achse 44 gelagert sind. Die Achse 44 kann die Zinken 45, 46 jedoch auch starr aufnehmen, wobei dann die Achse 44 frei drehbar im Befestigungsarm 43 befestigt ist. Mit einer derartigen Anordnung kann bei einer Rotation der Welle 41 jeder Striegelzinken 45, 46 bei der Rotation frei in der Rotationsebene auslenken. Die Striegelzinken 45, 46 können starr ausgebildet sein und z.B. aus Metall bestehen; sie können jedoch auch aus einem Material bestehen, das beim Auftreffen auf ein Hindernis ausweichen kann und sich selbst rückstellt oder zwangsweise rückgestellt wird. Die Selbstrückstellung erfolgt vorzugsweise durch das Eigengewicht der Zinken 45, 46 und/oder die Rotationsgeschwindigkeit der Welle. Die Rückstellung kann auch zusätzlich durch Federkraft erfolgen. Die Striegelzinken 45, 46 sind in Figur 4 in der Rotationsebene verlaufend ausgebildet und bestehen vorzugsweise aus Metallplatten.

Bei der Ausführungsform nach Fig. 5 sind die Zinken 47, 48 vom Befestigungsarm 43 weg nach außen divergierend ausgebildet, während die Zinken 49 und 50 nach Fig. 6 stufen-bzw. L-förmig ausgebildet sind, so daß die äußeren Abschnitte 51, 52 in der Rotationsebene liegen.

Fig. 7 zeigt schematisch eine Anordnung der Striegelzinken in Form einer Spiralfeder 53, wobei die Zinken 54, 55 als freie Enden der Spiralfeder ausgebildet sind und die Mitte der Spiralfeder 56 am Befestigungsarm 43 festgelegt ist. Anstelle einer derartigen Spiralfeder kann eine Drehstabfeder, eine Gummifeder oder dergl. vorgesehen sein. Das Federsystem ist selbstrückstellend, so daß die Zinken bei einer Auslenkung selbsttätig in die Ausgangsposition zurückkehren.

Bei der Ausführungsform nach Fig. 8 ist beidseitig des Befestigungsarmes 43 jeweils eine Blattfeder 57, 58 befestigt, die sowohl in der Rotationsebene als auch in Querrichtung dazu auslenkbar sind und damit Hindernissen ausweichen sowie sich selbst in die Ausgangsposition zurückstellen.

Fig. 9 zeigt eine abgeänderte Ausführungsform, bei der die Blattfedern selbst fest mit der Drehwelle 41 verbunden, z.B. verschweißt sind, so daß hierbei ein Befestigungsarm entfällt.

In Fig. 10 ist eine allgemeine Ausführungsform dargestellt, bei der zwei Striegelelemente 61, 62 starr auf der Welle 41 befestigt sind. Diese Striegelelemente 61 und 62 können an ihrem Befestigungsende starre Elemente 63, 64 sein, an die sich radial nach außen auslenkbare Elemente 65, 66 anschließen, die beim Auftreffen auf Hindernisse auslenkbar sind, die auswechselbar ausgebildt sein können und die sich nach Verlassen des Hindernisses wieder selbsttätig oder durch Federvorspannung zwangsläufig in die Ausgangslage zurückbewegen. Die Zinken sind bei allen beschriebenen Ausführungsformen vorzugsweise aus Metall hergestellt, können jedoch auch aus Hartkunststoff oder entsprechendem anderen harten und abriebfesten Material bestehen.

## Patentansprüche

1. Einrichtung zum Säen von Saatgut mit Minimalbodenbearbeitung in einem Arbeitsgang, mit der im Erdreich Saatrillen gezogen werden anschließend das abgelegte Saatgut mit dem über der Bodensohle liegenden bearbeiteten Erdreich abgedeckt und das in den Särillen abgelegte Saatgut mit einer rotierend angetriebenen Vorrichtung, insbesondere einer Striegelwalze, mit den zu beiden Seiten der Särillen vorhandenen Scharstielanhäufungen bedeckt und gleichzeitig an den Scharstielen angesammelte, Erdreich aufweisende organische Masse hinter den Scharstielen bzw. Saatrohren verteilt und egalisiert wird, wobei die rotierende Vorrichtung mit gleicher oder höherer Umfangsgeschwindigkeit als die Fahrgeschwindigkeit angetrieben wird, dadurch gekennzeichnet daß die Striegelemente, insbes. Striegelzinken aufweisende Striegelwalze zwischen zwei hintereinander liegenden Reihen von Saatgutausläufen wirkend angeordnet ist, daß der Durchmesser des Umkreises der Striegelelemente etwas größer als der Abstand zweier benachbarter Saatgutausläufe und so groß ausgelegt ist, daß die Striegelelemente den, jeweiligen vorderen und hinteren Saatgutauslauf in Bodennähe abstreifend zugeordnet sind, und daß die Breite der Striegelelemente geringfügig kleiner ist als der axiale Abstand zweier benachbarter, auf Lücke hintereinander angeordneter Striegelelemente zweier benachbarter Achsen, derart, daß an den Saatgutausläufen vorhandenes organisches Material zwangsweise abgestreift wird .

2. Einrichtung nach Anspruch 1, dadurch gekennzeichnet, daß die Scharstiele, die Saatgutausläufe und die Striegelwalze auf einem Rahmengestell angeordnet sind, das über Stützräder, Stempelpackerwalze oder dgl. abgestützt und schleppergezogen ist, und daß der Saatgutbehälter auf einem separaten Rahmen befestigt ist, der vom Schlepper, z.B. der Schlepperdreipunktaufnahme, aufgenommen wird.

3. Einrichtung nach Anspruch 2, dadurch gekennzeichnet, daß zwischen Saatgutbehälterrahmen und Bodenbearbeitungsrahmen eine Federanordnung vorgesehen ist, mit der ein einstellbarer Druck auf den Bodenbearbeitungsrahmen ausgeübt wird.

4. Einrichtung nach Anspruch 2 oder 3, dadurch gekennzeichnet, daß die beiden Rahmengestelle miteinander und relativ zueinander höhenbeweglich und/oder längsbeweglich verbunden sind.

5. Einrichtung nach einem der Ansprüche 1 - 4, dadurch gekennzeichnet daß jeder Reihe von Saatgutausläufen eine getrennte Striegelwalze zugeordnet ist, und daß jedes Striegelelement zwischen zwei benachbarten Saatgutausläufen einer Reihe angeordnet und die Saatgutausläufe abstreifend angeordnet ist.

6. Einrichtung nach einem der Ansprüche 1 - 5, dadurch gekennzeichnet, daß die zwischen den Saatrohrausläufen wirkenden Striegelzinken bzw. zumindest deren äußerer Abschnitt auslenkbar bzw. beweglich ausweichend und selbstrückstellend bzw. zwangsrückstellend ausgebildet sind.

7. Einrichtung nach Anspruch 6, dadurch gekennzeichnet daß die Striegelzinken durch Federvorrichtungen ausweichend und selbstrückstellend bzw. zwangsrückstellend ausgebildet sind.

8. Einrichtung nach Anspruch 6, dadurch gekennzeichnet, daß die Zinken durch Eigengewicht bzw. durch Rotationsenergie rückstellend ausgebildet sind.

9. Einrichtung nach Anspruch 6 oder 7, dadurch gekennzeichnet, daß die Striegelzinken als auf mit der Welle befestigten Befestigungsarmen verbundene Blatt- oder Spiralfedern ausgebilet sind.

10. Einrichtung nach Anpruch 6 oder 8, dadurch gekennzeichnet, daß die Zinke an mit der Welle verbundenen Befestigungsarmen gelenkig gelagert sind.

11. Einrichtung nach einem der Ansprüche 6 - 10, dadurch gekennzeichnet, daß die Zinken an durch die Befestigungsarme gehende Querachsen relativ zur Achse drehbar bzw. auslenkbar angeordnet sind.

12. Einrichtung nach einem der Ansprüche 6 - 11, dadurch gekennzeichnet, daß die Zinken einseitig oder beidseitig eines Befestigungsarmes relativ zu diesem drehbar angeordnet sind und eine sich radial nach außen erweiternde bzw. divergierende Form, z.B. V-Form, Stufenform, Gabelform oder dgl. haben.

13. Einrichtung nach Anspruch 6 oder 7, dadurch gekennzeichnet, daß die Federn Gummifedern, Drehstabfedern, Torsionsfedern oder dgl. sind.

14. Einrichtung nach Anspruch 6, dadurch gekennzeichnet, daß die Welle mit Werkzeugen höhenbeweglich im Maschinenrahmen nach oben auslenkbar gelagert ist und durch Feder- und /oder Schwerkraft selbsttätig wieder in die Ausgangsstellung zurückkehrt.

15. Einrichtung zum Säen von Saatgut mit Minimalbodenbearbeitung in einem Arbeitsgang, mit der im Erdreich Saatrillen gezogen werden, anschließend das abgelegte Saatgut mit dem über der Bodensohle liegenden bearbeiteten Erdreich abgedeckt und das in den Särillen abgelegte Saatgut mit einer rotierend angetriebenen Vorrichtung, insbesondere einer Striegelwalze, mit den zu beiden Seiten der Särillen vorhandenen Scharstielanhäufungen bedeckt und gleichzeitig an den Scharstielen angesammelte, Erdreich aufweisende organische Masse hinter den Scharstielen bzw. Saatrohren verteilt und egalisiert wird, wobei die rotierende Vorrichtung mit gleicher oder höherer Umfangsgeschwindigkeit als die Fahrgeschwindigkeit angetrieben wird, dadurch gekennzeichnet, daß die zwischen den Saatrohrausläufen wirkenden Striegelzinken bzw. zumindest deren äußerer Abschnitt auslenkbar bzw. beweglich ausweichend und selbstrückstellend bzw. zwangsrückstellend ausgebildet sind.
